(19) Europäisches Patentamt
European Patent Office
Office européen des brevets

(11) EP 0 593 454 B1

## (12) EUROPÄISCHE PATENTSCHRIFT

(45) Veröffentlichungstag und Bekanntmachung des Hinweises auf die Patenterteilung:
**14.05.1997 Patentblatt 1997/20**

(21) Anmeldenummer: 91905791.9

(22) Anmeldetag: 09.03.1991

(51) Int. Cl.⁶: $B05D\ 7/26$

(86) Internationale Anmeldenummer:
**PCT/EP91/00447**

(87) Internationale Veröffentlichungsnummer:
**WO 91/14514 (03.10.1991 Gazette 1991/23)**

(54) **VERFAHREN ZUR HERSTELLUNG EINER MEHRSCHICHTIGEN LACKIERUNG UND FÜR DIESES VERFAHREN GEEIGNETE WÄSSRIGE BASISLACKE**

PROCESS FOR PRODUCING A MULTICOAT ENAMEL AND AQUEOUS BASE ENAMEL SUITABLE FOR SAID PROCESS

PROCEDE POUR LA FABRICATION D'UN LAQUAGE MULTICOUCHE ET LAQUES DE BASE AQUEUSES SE PRETANT A CE PROCEDE

(84) Benannte Vertragsstaaten:
**AT BE CH DE DK ES FR GB IT LI NL SE**

(30) Priorität: **28.03.1990 DE 4009858**

(43) Veröffentlichungstag der Anmeldung:
**27.04.1994 Patentblatt 1994/17**

(73) Patentinhaber: **BASF Lacke + Farben AG**
**48165 Münster-Hiltrup (DE)**

(72) Erfinder:
• **SCHWARTE, Stephan**
**D-4407 Emsdetten (DE)**
• **LASSMANN, Walter**
**D-4400 Münster (DE)**
• **PIONTEK, Susanne**
**D-4400 Münster (DE)**
• **NIEMANN, Jürgen**
**D-8700 Würzburg (DE)**
• **EIKELMANN, Klaus**
**D-4400 Münster (DE)**
• **POTH, Ulrich**
**D-4400 Münster (DE)**
• **DOBBELSTEIN, Arnold**
**verstorben (DE)**

(74) Vertreter: **Münch, Volker, Dr.**
**BASF Lacke + Farben AG**
**Patente/Lizenzen/Dokumentation**
**Postfach 61 23**
**48136 Münster (DE)**

(56) Entgegenhaltungen:
**EP-A- 0 363 723** **US-A- 4 360 641**

• **Chemical Abstracts, Band 98, Nr 14, 4. April 1983 (Columbus, Ohio, US), sieheSeite 53**
• **WO 90/03851**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung einer mehrschichtigen, schützenden und/oder dekorativen Lakkierung, bei dem

(1) als Basislack ein wäßriger pigmentierter Basis-Lack auf die Substratoberfläche aufgebracht wird

(2) aus dem in Stufe (1) aufgebrachten Lack ein Polymerfilm gebildet wird

(3) auf der so erhaltenen Basisschicht ein transparenter Decklack aufgebracht wird und anschließend

(4) die Basisschicht zusammen mit dem Decklack eingebrannt wird.

Bei diesem Verfahren handelt es sich um das gut bekannte base coat/clear coat-Verfahren, das vor allem in der Automobilindustrie zur Herstellung hochwertiger Decklackierungen, insbesondere Metalleffektlackierungen eingesetzt wird (vgl. z.B. EP-A-38 127, EP-A-89 497 und DE-OS-36 28 124).

Die Erfindung betrifft auch wäßrige Lacke, die in dem o.g. Verfahren als Basislacke eingesetzt werden können.

Bei dem in Rede stehenden basecoat/clearcoat-Verfahren werden im überwiegenden Maße Basislacke eingesetzt, die als Verdünnungs- und/oder Lösemittel ausschließlich organische Lösemittel enthalten.

Die Lackindustrie ist aus ökologischen und ökonomischen Gründen bestrebt, einen möglichst großen Teil der organischen Lösemittel durch Wasser zu ersetzen. Es besteht ein großer Bedarf an wäßrigen Basislacken, die im oben beschriebenen basecoat/clearcoat-Verfahren verwendbar sind. Ein wesentliches Merkmal des basecoat/clearcoat-Verfahrens besteht darin, daß der transparente Decklack auf die noch nicht eingebrannte Basisschicht lackiert wird und erst danach Basisschicht und Decklack gemeinsam eingebrannt werden (Naß-in-Naß-Verfahren).

Die der vorliegenden Erfindung zugrundeliegende Aufgabenstellung besteht in der Bereitstellung neuer wäßriger Lacke, die als Basislacke für das basecoat/clearcoat-Verfahren verwendbar sind. Diese Aufgabe wird überraschenderweise durch die Bereitstellung von wäßrigen Lacken gelöst, die ein nichtmetallisches Pigment oder eine Mischung aus nichtmetallischen Pigmenten und eine Mischung aus

(A) 10 bis 95 Gew.-% eines wasserverdünnbaren Polyacrylatharzes,

(B) 5 bis 50 Gew.-% eines Aminoplastharzes,

(C) 20 bis 60 Gew.-% eines wasserverdünnbaren Polyesterharzes und

(D) 0 bis 85 Gew.-% eines wasserverdünnbaren Polyurethanharzes,

enthalten, wobei die Summe der Gewichtsanteile der Komponenten (A) bis (D) stets 100 Gew.-% beträgt und wobei das wasserverdünnbare Polyacrylatharz (A) erhältlich ist, indem

(I)

(a1) 40 bis 90, vorzugsweise 40 bis 80 Gew.-% eines im wesentlichen carboxylgruppenfreien Alkyl(meth)acrylates mit bis zu 20 Kohlenstoffatomen im Alkylrest oder eines cycloaliphatischen (Meth)acrylsäureesters oder eines Gemisches aus solchen (Meth)acrylsäureestern

(a2) 0 bis 45, vorzugsweise 4 bis 34 Gew.-% eines Hydroxyalkylesters der Acrylsäure, Methacrylsäure oder einer anderen $\alpha,\beta$-ethylenisch ungesättigten Carbonsäure, der im wesentlichen carboxylgruppenfrei ist oder eines Gemisches aus solchen Hydroxyalkylestern und

(a3) 0 bis 40, vorzugsweise 10 bis 30 Gew.-% eines im wesentlichen carboxylgruppenfreien vinylaromatischen Kohlenwasserstoffes oder eines Gemisches aus im wesentlichen carboxylgruppenfreien vinylaromatischen Kohlenwasserstoffen

zu einem organischen Lösemittel oder Lösemittelgemisch gegeben und in Gegenwart mindestens eines Polymerisationsinitiators polymerisiert werden, und

(II)
nachdem mindestens 80 Gew.-% der in Stufe (I) zugegebenen Monomeren umgesetzt worden sind

(b1) 2,5 bis 15, vorzugsweise 3 bis 7 Gew.-% einer ethylenisch ungesättigten Säure mit bis zu 6 Kohlenstoffatomen im Molekül oder eines Gemisches aus solchen ethylenisch ungesättigten Säuren und

(b2) 0 bis 60, vorzugsweise 0 bis 28 Gew.-% eines ethylenisch ungesättigten Monomeren oder eines Gemisches aus Monomeren, wie es unter (a1), (a2) oder (a3) definiert worden ist

zugegeben werden und weiterpolymerisiert wird und

(III)

das nach Beendigung der Polymerisation erhaltene Polyacrylatharz zumindest teilweise neutralisiert und in Wasser dispergiert wird, wobei die Summe der Gewichtsanteile von (a1), (a2), (a3), (b1) und (b2) stets 100 Gew.-% ergibt und (a1), (a2), (a3), (b1) und (b2) in Art und Menge so ausgewählt werden, daß das aus (a1), (a2), (a3), (b1) und (b2) erhaltene Polyacrylatharz eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 bis +60 °C, vorzugsweise -20 bis +40 °C, aufweist.

Die erfindungsgemäß eingesetzten wasserverdünnbaren Polyacrylatharze ermöglichen die Formulierung von Basislacken, die - insbesondere im Vergleich zu bekannten polyacrylatharzhaltigen Basislacken - einen erhöhten Feststoffgehalt und eine geringere Läuferneigung aufweisen. Außerdem führt der Einsatz der erfindungsgemäßen wasserverdünnbaren Polyacrylatharze insbesondere in polyurethanhaltigen Basislacken zu einer Stabilisierung gegenüber schwankender Scherbelastung. Insbesondere bei Belastung durch schwache Scherkräfte treten gegenüber dem Stand der Technik geringere bzw. keine Viskositätserniedrigungen auf. Das hat ein verbessertes Absetzverhalten, einfachere Handhabbarkeit und erhöhte Applikationssicherheit zur Folge.

In der EP-A-363 723 und WO-A-90/03851 welche hollidierende Anmeldungen darstellen werden wäßrige transparente Lacke offenbart, die Polyacrylatharze enthalten, die erhältlich sind, indem in einer ersten Stufe carboxylgruppenhaltige Monomere und in einer zweiten Stufe carboxylgruppenhaltige Monomere polymerisiert werden. Diese Lacke enthalten keine Metallpigmente bzw. nichtmetallischen Pigmente in Kombination mit einer Mischung aus den Komponenten (A), (B) ,(C) und (D).

Bevor die Herstellung der erfindungswesentlichen, wasserverdünnbaren Polyacrylatharze näher beschrieben wird, werden zwei Begriffsklärungen vorausgeschickt:

1.) Als Abkürzung für "Methacrylsäure- oder Acrylsäure-" wird gelegentlich (Meth)acrylsäure- verwendet.

2.) Die Formulierung "im wesentlichen carboxylgruppenfrei" soll ausdrücken, daß die Komponenten (a1), (a2), (a3) und (b2) einen geringen Carboxylgruppengehalt (höchstens aber soviel, daß ein aus den Komponenten (a1), (a2), (a3) und (b2) hergestelltes Polyacrylatharz eine Säurezahl von höchstens 10 hat) aufweisen können. Es ist aber bevorzugt, daß der Carboxylgruppengehalt der Komponenten (a1), (a2), (a3) und (b2) so niedrig wie möglich gehalten wird. Besonders bevorzugt werden völlig carboxylgruppenfreie (a1), (a2), (a3) und (b2)-Komponenten eingesetzt.

Zur Herstellung der erfindungsgemäß einzusetzenden Polyacrylatharze werden als Komponente (a1) im wesentlichen carboxylgruppenfreie Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl- Stearyl- und Laurylacrylat und - methacrylat oder cycloaliphatische (Meth)acrylsäureester, wie z.B. Cyclohexyl(meth)acrylat, oder ein Gemisch aus solchen (Meth)acrylsäureestern eingesetzt. Bevorzugt werden Gemische aus Alkylacrylaten und/oder Alkylmethacrylaten als (a1) Komponente eingesetzt, die zu mindestens 25 Gew.-% aus n-Butyl- und/oder t-Butylacrylat und/-oder n-Butyl- und/oder t-Butylmethyacrylat bestehen.

Als Komponente (a2) werden Hydroxyalkylester der Acrylsäure, Methacrylsäure oder einer anderen $\alpha,\beta$-ethylenisch ungesättigten Carbonsäure, die im wesentliche carboxylgruppenfrei sind oder ein Gemisch aus solchen Hydroxyalkylestern eingesetzt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure und Methacrylsäure, in denen die Hydroxyalkylgruppe bis zu 4 Kohlenstoffatome enthält, Umsetzungsprodukte aus cyclischen Estern, wie z.B. $\varepsilon$-Caprolacton und diesen Hydroxyalkylestern oder Mischungen aus diesen Hydroxyalkylestern bzw. $\varepsilon$-caprolactonmodifizierten Hydroxyalkylestern eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat und 4-Hydroxybutylmethacrylat genannt. Entsprechende Ester von anderen ungesättigten Säuren, wie z.B. Ethacrylsäure, Crotonsäure und ähnliche Säuren mit bis zu 6 Kohlenstoffatomen pro Molekül, können auch eingesetzt werden.

Als Komponente (a3) werden im wesentlichen carboxylgruppenfreie vinylaromatische Kohlenwasserstoffe , wie Styrol, α-Alkylstyrol und Vinyltoluol, oder Gemische aus im wesentlichen carboxylgruppenfreien vinylaromatischen Kohlenwasserstoffen eingesetzt.

Die erfindungsgemäß verwendeten Polyacrylatharze werden hergestellt, indem in Stufe (I) die Komponente (a1) gegebenenfalls zusammen mit (a2) und gegebenenfalls zusammen mit (a3) in einem organischen Lösemittel oder Lösemittelgemisch in Gegenwart mindestens eines Polymerisationsinitiators polymerisiert wird.

Als organische Lösemittel und Polymerisationsinitiatoren können die für die Herstellung von Polyacrylatharzen üblichen und für die Herstellung von wäßrigen Dispersionen geeigneten Lösemittel und Polymerisationsinitiatoren eingesetzt werden. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether und 3-Methyl-3-methoxybutanol genannt. Als Beispiele für brauchbare Polymerisationsinitiatoren werden freie Radikale bildende Initiatoren, wie z.B. Benzoylperoxid, Azobisisobutyronitril, t-Butylperethylhexanoat und t-Butylperbenzoat genannt. Die Polymerisation wird zweckmäßigerweise bei einer Temperatur von 80 bis 160 °C, vorzugsweise 110 bis 160 °C durchgeführt.

Nachdem mindestens 80 Gew.-%, vorzugsweise mindestens 90 Gew.-%, der in Stufe (I) zugegebenen Monomere umgesetzt worden sind, werden in Stufe (II)

(b1) 2,5 bis 15, vorzugsweise 3, bis 7 Gew.-% einer ethylenisch ungesättigten Säure mit bis zu 6 Kohlenstoffatomen im Molekül oder

eines Gemisches aus solchen ethylenisch ungesättigten Säuren und

(b2) 0 bis 60, vorzugsweise 0 bis 28 Gew.-% eines ethylenisch ungesättigten Monomeren oder eines Gemisches aus Monomeren, wie es unter (a1), (a2) oder (a3) definiert worden ist

zugegeben und in Gegenwart des in Stufe (I) erhaltenen Reaktionsproduktes polymerisiert. In der Stufe II wird so lange polymerisiert, bis die in den Stufen (I) und (II) zugegebenen Monomeren im wesentlichen vollständig umgesetzt worden sind.

Als Komponente (b1) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Etharylsäure, Crotonsäure, Maleinsäure, Fumarsäure und Itaconsäure genannt. Als Komponente (b1) können auch Maleinsäuremono(meth)acryloyloxiethylester, Bernsteinsäuremono(meth)acryloyloxiethylester und Phtalsäuremono(meth)acryloyloxiethylester eingesetzt werden.

Als Komponente (b2) können alle bei der Beschreibung der Komponenten (a1), (a2) und (a3) aufgezählten Monomere oder ein Gemisch aus solchen Monomeren eingesetzt werden.

Die Komponenten (a1), (a2), (a3), (b1) und (b2) werden in Art und Menge so ausgewählt, daß das Polyacrylatharz eine Hydroxylzahl von 0 bis 200, vorzugsweise 20 bis 120, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

Die Glasübergangstemperaturen von Polyacrylatharzen können nach folgender Formel berechnet werden:

$$\frac{1}{T_G} = \sum_{n=1}^{n=x} \frac{W_n}{T_{GN}}$$

$T_G$ = Glasübergangstemperatur des Polyacrylatharzes
x = Anzahl der im Polyacrylatharz einpolymerisierten verschiedenen Monomere
$W_n$ = Gewichtsanteil des n-ten Monomers
$T_{Gn}$ = Glasübergangstemperatur des Homopolymers aus dem n-ten Monomer

Die Menge und Zugabegeschwindigkeit des Initiators wird vorzugsweise so gewählt, daß ein Polyacrylatharz mit einem zahlenmittleren Molekulargewicht von 2500 bis 20000 erhalten wird. Es ist bevorzugt, die Initiatorzugabe zum gleichen Zeitpunkt wie die Zugabe der Monomeren zu beginnen und etwa eine halbe Stunde nachdem die Zugabe der Monomeren beendet worden ist, zu beenden. Der Initiator wird vorzugsweise in konstanter Menge pro Zeiteinheit zugegeben. Nach Beendigung der Initiatorzugabe wird das Reaktionsgemisch noch so lange (in der Regel etwa 1 1/2 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Nach Beendigung der Polymerisation wird das erhaltene Polyacrylatharz zumindest teilweise neutralisiert und in Wasser dispergiert.

Zur Neutralisation können sowohl organische Basen als auch anorganische Basen verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Die Neutralisationsreaktion wird im allgemeinen durch Mischen der neutralisierenden Base mit dem Polyacrylatharz durchgeführt. Dabei wird vorzugsweise soviel Base eingesetzt, daß der Basislack einen pH-Wert von 7-8,5, vorzugsweise 7,2 bis 7,8 aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittleren Teilchengröße vorzugsweise zwischen 60 und 300 nm liegt (Meßmethode: Laserlichtstreuung, Meßgerät: Malvern Autosizer 2C).

Mit den oben beschriebenen Polyacrylatharzen als Bindemittel können erfindungsgemäße wäßrige Basislacke hergestellt werden. Es ist jedoch bevorzugt, die Polyacrylatharze mit mindestens einem wasserverdünnbaren Polyurethanharz und/oder mindestens einem wasserverdünnbaren Polyesterharz und/oder mindestens einem wasserverdünnbaren Aminoplastharz als Bindemittel zu kombinieren. Bei Basislacken, die nur nichtmetallische Pigmente bzw. Mischungen aus nichtmetallischen Pigmenten und keine Metallpigmente enthalten, wird eine Mischung eingesetzt aus

(A) 10 bis 95, vorzugsweise 25 bis 70 Gew.-% des erfindungsgemäßen wasserverdünnbaren Polyacrylatharzes,

(B) 5 bis 50, vorzugsweise 10 bis 40 Gew.-% eines Aminoplastharzes,

(C) 20 bis 60 Gew.-% eines wasserverdünnbaren Polyesterharzes und

(D) 0 bis 85, vorzugsweise 0 bis 40 Gew.-% eines wasserverdünnbaren Polyurethanharzes.

Die Summe der Gewichtsanteile der Komponenten (A) bis (D) beträgt stets 100 Gew.-%.

Bei Basislacken, die ein Metallpigment oder eine Mischung aus Metallpigmenten, ggf. in Kombination mit nichtmetallischen Pigmenten, enthalten, wird als Bindemittel vorzugsweise eine Mischung eingesetzt aus

(A) 0,1 bis 60, vorzugsweise 1 bis 30 Gew.-% des erfindungsgemäßen wasserverdünnbaren Polyacrylatharzes,

(B) 0 bis 50, vorzugsweise 5 bis 30 Gew.-% eines Aminoplastharzes,

(C) 0 bis 50, bevorzugt 15 bis 40 Gew.-% eines wasserverdünnbaren Polyesterharzes und

(D) 10 bis 99,9, vorzugsweise 20 bis 60 Gew.-% eines wasserverdünnbaren Polyurethanharzes.

Die Summe der Gewichtsanteile der Komponenten (A) bis (D) beträgt stets 100 Gew.-%.

Mit den in Rede stehenden Polyacrylatharzen können z.B. wasserverdünnbare Polyurethanharze kombiniert werden, die herstellbar sind, indem

(i) ein Polyester- und/oder Polyetherpolyol mit einem zahlenmittleren Molekulargewicht von 400 bis 5000 oder ein Gemisch aus solchen Polyester- und/oder Polyetherpolyolen

(ii) ein Polyisocyanat oder einem Gemisch aus Polyisocyanaten

(iii) eine Verbindung, die mindestens eine gegenüber Isocyanatgruppen reaktive und mindestens eine zur Anionenbildung befähigte Gruppe im Molekül aufweist oder ein Gemisch aus solchen Verbindungen

(iv) gegebenenfalls eine Hydroxyl- und/oder Aminogruppen enthaltende organische Verbindung mit einem Molekulargewicht von 40 bis 600 oder ein Gemisch aus solchen Verbindungen und

(v) gegebenenfalls eine Verbindung, die mindestens eine gegenüber NCO-Gruppen reaktive Gruppe und mindestens eine Poly(oxyalkylen)gruppe im Molekül aufweist oder ein Gemisch aus solchen Verbindungen

miteinander umgesetzt werden und das entstandene Reaktionsprodukt wenigstens teilweise neutralisiert wird. Das Polyurethanharz sollte zweckmäßigerweise eine Säurezahl von 10 bis 60 und ein zahlenmittleres Molekulargewicht von 4000 bis 25.000 aufweisen.

Die Polyurethanharze können aus (i), (ii), (iii), ggf. (iv) und gegebenenfalls (v) nach dem Fachmann gut bekannten Methoden der Polyurethanchemie hergestellt werden (vgl. z.B. US-PS-4,719,132, DE-OS-36 28 124, EP-A-89 497, EP-A-256 540 und WO 87/03829).

Als Komponente (i) können gesättigte und ungesättigte Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel $H(-0-(CHR^1)_n-)_mOH$, wobei $R^1$ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole, wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich $M_n$ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebacinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel $(-CO-(CHR^2)_n-CH_2-0)$ aus. Hierbei ist n bevorzugt 4 bis 6 und der Substituent $R^2$ Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte $\varepsilon\Sigma$-Caprolacton, bei dem n den Wert 4 hat und alle R-Substituenten Wasserstoff sind, bevorzugt. Die Umsetzung mit Lacton kann durch niedermolekulare Polyole, wie Ethylenglykol, 1,3-Propandiol, 1,4 Butandiol, Dimethylolcyclohexan gestartet werden. Es können jedoch auch andere Reaktionskomponenten, wie Ethylendiamin, Alkyldialkanolamine oder auch Harnstoff mit Caprolacton umgesetzt werden.

Als Komponente (ii) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele hierfür sind Isophorondiisocyanat, Cyclopentylendiisocyanat sowie Hydrierungsprodukte der aromatischen Diisocyanate, wie Cyclohexylendiisocyanat, Methylcyclohexylendiisocyanat und Dicyclohexylmethandiisocyanat. Aliphatische Diisocyanate sind Verbindungen der Formel

$$OCN-(CR^3_2)_r-NCO$$

worin r eine ganze Zahl von 2 bis 20, insbesondere 6 bis 8 ist und $R^3$, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethandiisocyanat eingesetzt.

Die Komponente (ii) muß hinsichtlich der Funktionalität der Polyisocyanate so zusammengesetzt sein, daß kein

EP 0 593 454 B1

vernetztes Polyurethanharz erhalten wird. Die Komponente (ii) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Um die Wasserverdünnbarkeit der eingesetzten Polyurethanharze zu gewährleisten, müssen zur Anionenbildung befähigte Gruppen in die Polyurethanmoleküle eingebaut werden. Die zur Anionenbildung befähigten Gruppen sorgen nach ihrer Neutralisation dafür, daß das Polyurethanharz in Wasser stabil dispergiert werden kann. Das Polyurethanharz soll eine Säurezahl von 10 bis 60, vorzugsweise 20 bis 35 aufweisen. Aus der Säurezahl kann die in die Polyurethanmoleküle einzuführende Menge an zur Anionenbildung befähigten Gruppen berechnet werden.

Die Einführung von zur Anionenbildung befähigten Gruppen in die Polyurethanmoleküle erfolgt über den Einbau von Verbindungen (iii).

Als Komponente (iii) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (iii) können beispielsweise Alkansäuren mit zwei Substituenten an $\alpha$-ständigen Kohlenstoffatomen eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (iii) sind Dihydroxypropionsäure, Dihydroxybernsteinsäure und Dihydroxybenzoesäure Eine besonders bevorzugte Gruppe von Alkansäuren sind die $\alpha,\alpha$-Dimethylolalkansäuren der allgemeinen Formel $R^4$-C(CH$_2$OH)$_2$COOH, wobei $R^4$ für ein Wasserstoffatom oder eine Alkylgruppe mit bis zu etwa 20 Kohlenstoffatomen steht. Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise $\alpha,\delta$-Diaminovaleriansäure, 3,4-Diaminobenzoesäure, 2,4-Diaminotoluolsulfonsäure und 2,4-Diamino-diphenylethersulfonsäure.

Die erfindungsgemäß eingesetzten Polyurethanharze können gegebenenfalls unter Mitverwendung von Hydroxyl- und/oder Aminogruppen enthaltenden organischen Verbindungen mit einem Molekulargewicht von 40 bis 600, oder einem Gemisch aus solchen Verbindungen hergestellt werden (Komponente (iv)). Der Einsatz der Komponente (iv) führt zur Molekulargewichtserhöhung der Polyurethanharze. Als Komponente (iv) können beispielsweise Polyole mit bis zu 20 Kohlenstoffatomen je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden.

Die Polyole werden im allgemeinen in Mengen von bis zu 30 Gewichtsprozent, vorzugsweise 2 bis 20 Gewichtsprozent, bezogen auf die eingesetzte Menge an Komponenten (i) und (iv) eingesetzt. Als Komponente (iv) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine, wie Propylendiamin und 1-Amino-3-amino-methyl-2,5,5-trimethylcyclohexan. Es können auch Polyamine als Komponente (iv) eingesetzt werden, die mehr als zwei Aminogruppen im Molekül enthalten. In diesen Fällen ist jedoch z.B. durch Mitverwendung von Monoaminen darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Mit Hilfe der Komponenten (v) können Poly(oxyalkylen)-gruppen als nichtionische stabilisierende Gruppen in die Polyurethanmoleküle eingeführt werden. Als Komponente (v) können beispielsweise eingesetzt werden Alkoxypoly(oxyalkylen)alkohole mit der allgemeinen Formel R'0-(-CH$_2$-CHR''-0-)$_n$ H in der R' für einen Alkylrest mit 1 bis 6 Kohlenstoffatomen, R'' für ein Wasserstoffatom oder einen Alkylrest mit 1 bis 6 Kohlenstoffatomen und n für eine Zahl zwischen 20 und 75 steht.

Die Herstellung der in Kombination mit dem erfindungswesentlichen Polyacrylatharz einsetzbaren Polyurethan-

7

EP 0 593 454 B1

harze gehört zum Stand der Technik und wird z.B. in der US-PS-4,719,132, DE-OS-3 628 124, EP-A-89 497, EP-A-256 450 und WO 87/03829 ausführlich beschrieben.

Die in Kombination mit den erfindungswesentlichen Polyacrylatharzen einsetzbaren wasserverdünnbaren Polyesterharze können aus Polycarbonsäuren und Polyolen nach allgemein gut bekannten Methoden hergestellt werden. Zur Herstellung der Polyesterharze können alle bei der Beschreibung der Komponente (i) aufgezählten Ausgangsstoffe eingesetzt werden.

Als wasserverdünnbare Polyesterharze werden vorzugsweise Polyesterharze eingesetzt, die erhältlich sind, indem

($\alpha$) Polyole oder ein Gemisch aus Polyolen und

($\beta$)Polycarbonsäuren oder Polycarbonsäureanhydride oder ein Gemisch aus Polycarbonsäuren und/oder Polycarbonsäureanhydriden zu einem Polyesterharz mit einem zahlenmittleren Molekulargewicht von 600 bis 5000, vorzugsweise 800 bis 2500, einer Säurezahl von 20 bis 70, vorzugsweise 25 bis 55 und einer Hydroxylzahl von 30 bis 200, vorzugsweise 45 bis 100 umgesetzt werden, wobei

- die Komponenten ($\alpha$) und ($\beta$) in einem molaren Verhältnis von 1,15 - 2,00 : 1, vorzugsweise 1,2 - 1,5 : 1 eingesetzt werden,

- die Komponente ($\alpha$) zu 30 bis 100 Mol-% aus aliphatischen Diolen besteht, die mindestens ein $\alpha$ C-Atom enthalten, das sekundär, tertiär oder Glied eines kohlenstoffhaltigen Ringsystems ist und

- die Komponente ($\beta$) zu 50 bis 100 Mol-% aus aromatischen und/oder cycloaliphatischen Polycarbonsäuren und zu 15 bis 40 Mol-% aus Tri- und/oder Tetracarbonsäuren besteht, wobei die Tri- und/oder Tetracarbonsäuren so eingesetzt werden, daß sie über mindestens zwei Carboxylgruppen in die Polyesterharzmoleküle eingebaut werden.

Die Komponente ($\alpha$) besteht zu

($\alpha$1) 30 bis 100, vorzugsweise 50 bis 100 Mol-% aus aliphatischen Diolen, die mindestens ein $\alpha$-C-Atom enthalten, das sekundär, tertiär oder Glied eines kohlenstoffhaltigen Ringsystems ist.

($\alpha$2) 0 bis 20, vorzugsweise 0 bis 10 Mol-% aus aliphatischen Triolen und

($\alpha$3) 0 bis 40, vorzugsweise 0 bis 20 Mol-% aus ethergruppenhaltigen Diolen.

Als Komponente ($\alpha$1) kann prinzipiell jedes aliphatische Diol mit 4 bis 40, vorzugsweise 5 bis 12 Kohlenstoffatomen im Molekül eingesetzt werden, bei dem mindestens ein $\alpha$-C-Atom ein sekundäres oder tertiäres C-Atom oder ein Glied in einem kohlenstoffhaltigen Ringsystem ist. Es können auch Gemische solcher Diole eingesetzt werden. Als ($\alpha$1) Komponente sind beispielsweise Verbindungen einsetzbar, die mindestens ein Molekülfragment der allgemeinen Formel -C($R^1R^2$)-$CH_2$OH enthalten, wobei $R^1$ und $R^2$ für aliphatische, cycloaliphatische oder aromatische Kohlenwasserstoffreste mit 1 bis 20, vorzugsweise 1 bis 6 Kohlenstoffatomen stehen. Als Beispiele für solche Verbindungen werden Neopentylglykol, 2-Methyl-2-propylpropandiol-1,3, 2-Ethyl-2-butylpropandiol-1,3, 2-Ethyl-2-phenylpropandiol-1,3, 2,2,4 Trimethylpentandiol 1,5, 2,2,5 Trimethylhexandiol 1,6 und Hydroxypivalinsäureneopentylglykolester genannt. Als Beispiel für eine Verbindung, in der mindestens ein $\alpha$-C-Atom Glied in einem kohlenstoffhaltigen Ringsystem ist, wird Dimethylolcyclohexan genannt. Als Komponente ($\alpha$1) werden vorzugsweise Neopentylglykol, Hydroxypivalinsäureneopentylglykolester, Dimethylolcyclohexan und 2-Ethyl-2-butylpropandiol-1,3 eingesetzt.

Als Komponente ($\alpha$2) können beispielsweise Glycerin, Trimethylolpropan und Trimethylolethan eingesetzt werden.

Als Komponente ($\alpha$3) werden insbesondere solche Diole eingesetzt, die 1 bis 10 Ethersauerstoffatome im Molekül enthalten oder Mischungen aus solchen Verbindungen. Als Beispiele für die Komponente ($\alpha$3) werden genannt: Diethylenglykol, Dipropylenglykol, Triethylenglykol, Tripropylenglykol, Tetraethylenglykol, Tetrapropylenglykol sowie Poly(ethylenoxid), Poly(propylenoxid) und Poly(ethylenoxid)(propylenoxid) mit zahlenmittleren Molekulargewichten von 400 bis 600.

Die Komponente ($\beta$) besteht zu

($\beta$1) 50 bis 100, vorzugsweise 50 bis 80 Mol-% aus aromatischen und/oder cycloaliphatischen Polycarbonsäuren oder Mischungen aus solchen Polycarbonsäuren und

($\beta$2) 0 bis 50, vorzugsweise 20 bis 50 Mol.-% aus aliphatischen Polycarbonsäuren oder Mischungen aliphatischer Carbonsäuren,

8

wobei der Anteil an Tri- oder Tetracarbonsäuren 15 bis 40 Mol.-% beträgt. Anstelle der Carbonsäuren können selbstverständlich auch reaktive Carbonsäurederivate, wie z.B. Carbonsäureanhydride eingesetzt werden.

Als Komponente (β1) kann prinzipiell jede cycloaliphatische oder aromatische Polycarbonsäure mit 5 bis 30, vorzugsweise 6 bis 18 Kohlenstoffatomen im Molekül oder ein Anhydrid dieser Polycarbonsäure oder ein Gemisch aus diesen Polycarbonsäuren bzw. deren Anhydriden eingesetzt werden. Als Beispiele für einsetzbare Polycarbonsäuren werden Isophthalsäure, Terephthalsäure, Orthophthalsäure, Tetrahydrophthalsäure, Hexahydrophthalsäure, 1,4 Cyclohexandicarbonsäure, Dicyclopentadiendicarbonsäure, Trimesinsäure (Benzol-1,3,5-tricarbonsäure), Trimellithsäure, Pyromellithsäure und Endomethylentetrahydrophtalsäure sowie deren Anhydride genannt. Als Komponente (β1) werden vorzugsweise Isophtalsäure, Terephtalsäure, Orthophtalsäure, Tetrahydrophthalsäure, Hexahydrophtalsäure, Trimellithsäure, Pyromellithsäure, deren Anhydride oder Gemische aus diesen Polycarbonsäuren bzw. deren Anhydriden eingesetzt.

Als Komponente (β2) kann prinzipiell jede lineare oder verzweigte aliphatische Polycarbonsäure mit 2 bis 40 Kohlenstoffatomen im Molekül oder ein Anhydrid dieser Polycarbonsäuren oder ein Gemisch aus diesen Polycarbonsäuren bzw. deren Anhydriden eingesetzt werden. Als Beispiele für einsetzbare aliphatische Polycarbonsäuren werden Oxalsäure, Malonsäure, Bernsteinsäure, Glutarsäure, Adipinsäure, Pimelinsäure, Korksäure, Azelainsäure, Sebacinsäure, Maleinsäure, Fumarsäure, polymerisierte Fettsäuren und Zitronensäure sowie deren Anhydride genannt. Als Komponente (β2) werden vorzugsweise Adipinsäure, Azelainsäure, Sebazinsäure, Bernsteinsäure, deren Anhydride oder Gemische aus diesen Polycarbonsäuren bzw. deren Anhydriden eingesetzt. Als Komponente (β2) werden ganz besonders bevorzugt polymerisierte, insbesondere dimerisierte Fettsäuren eingesetzt. Wenn als Komponente (β2) polymerisierte Fettsäuren eingesetzt werden, dann werden Basislacke von besonders guter Lagerstabilität erhalten.

Polymere Fettsäuren werden i.a. hergestellt, indem Fettsäuren, wie beispielsweise Linolen-, Linol- oder Ölsäure einzeln, im Gemisch oder im Gemisch mit gesättigten Fettsäuren polymerisiert werden. Es entsteht ein Gemisch, das je nach Reaktionsführung hauptsächlich dimere, aber auch monomere und trimere Moleküle sowie Nebenprodukte enthält. Üblicherweise wird destillativ gereinigt. Handelsübliche polymere Fettsäuren enthalten i.a. mindestens 80 Gew.-% dimere Fettsäuren, bis zu 20 Gew.-% trimere Fettsäuren und maximal 1 Gew.-% monomere Fettsäuren. Es ist bevorzugt, als Komponente (β2) polymere Fettsäuren einzusetzen, die zu mindestens 98 Gew.-% aus dimeren Fettsäuren und höchstens 2 Gew.-% trimeren Fettsäuren und höchstens Spuren monomerer Fettsäuren besteht.

Polymere Fettsäuren enthalten sowohl cyclische als auch lineare aliphatische Molekülfragmente. Im Sinne der vorliegenden Erfindungen werden sie jedoch nicht als cycloaliphatische, sondern als lineare aliphatische Polycarbonsäuren angesehen und sind somit der Komponente (β2) zuzuschlagen.

Als Tri- bzw. Tetracarbonsäuren werden vorzugsweise Trimellithsäure bzw. Pyromellithsäure, deren Gemische oder deren Anhydride eingesetzt.

Die Herstellung der wasserverdünnbaren Polyesterharze erfolgt nach allgemein gut bekannten Methoden der Polyesterchemie durch Umsetzung der Komponenten (α) und (β). Die Reaktionstemperatur sollte zweckmäßigerweise bei 140 bis 240, vorzugsweise 180 bis 220 °C liegen. In manchen Fällen kann es zweckmäßig sein, die Veresterungsreaktion zu katalysieren. Beispiele für brauchbare Katalysatoren sind Tetrabutyltitanat, Zinkoctoat, Zinnoctoat, Dibutylzinnoxid, organische Salze des Dibutylzinnoxids usw.. Bei der Veresterung ist darauf zu achten, daß die Tri- bzw. Tetracarbonsäuren so in die Polyesterharzmoleküle eingebaut werden, daß im statistische Mittel mindestens zwei Carboxylgruppen verestert werden.

Zur Neutralisation der Polyesterharze können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin usw., eingesetzt werden. Für die Neutralisation werden leicht flüchtige Amine bevorzugt.

Die in Kombination mit den erfindungswesentlichen Polyacrylatharzen einsetzbaren Aminoplastharze werden von vielen Firmen als Verkaufsprodukte (z.B. Cymel® von American Cyanamid Company, Resimene® der Monsanto Company und Luwipal® der BASF AG) angeboten. Es handelt sich in der Regel um wenigstens teilweise veretherte Kondensationsprodukte aus aminogruppenhaltigen Verbindungen, insbesondere Melamin oder Benzoguanamin und Aldehyden, insbesondere Formaldehyd. Die Wasserverdünnbarkeit der Aminoplastharze hängt im allgemeinen vom Kondensationsgrad und von der Veretherungskomponente ab. Je niedriger der Kondensationsgrad und je kurzkettiger die Alkylgruppen in der Veretherungskomponente sind, desto besser ist die Wasserverdünnbarkeit der Aminoplastharze. Die Wasserverdünnbarkeit von Aminoplastharzen kann auch durch Einführung von Carboxylgruppen (z.B. Veretherung mit Hydroxycarbonsäuren) verbessert werden. Außerdem kann die Wasserverdünnbarkeit von Aminoplastharzen durch Zusatz von wasserverdünnbaren Lösemittel, wie z.B. Glykolether verbessert werden.

Neben den oben beschriebenen Bindemitteln können die erfindungsgemäßen Basislacke noch weitere wasserverdünnbare Kunstharze, die zum Anreiben der Pigmente und/oder als rheologiesteuernde Additive dienen, enthalten. Als Beispiele für solche Kunstharze werden genannt: Polyether, wie z.B. Polypropylenglykol mit einem zahlenmittleren Molekulargewicht von 400 bis 900, wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder carboxylgruppenhaltige Polyacrylate.

Die erfindungsgemäßen Basislacke können auch vernetzte Polymikroteilchen, wie sie z.B. in der EP-A-38 127 offenbart sind, enthalten.

Die erfindungsgemäßen Basislacke können auch anorganische Rheologiesteuerungsmittel, wie z.B. Schichtsilikate enthalten.

Als Pigmente können die erfindungsgemäßen Basislacke farbgebende Pigmente auf anorganischer Basis, wie z.B. Titandioxid, Eisenoxid, Ruß usw., und/oder farbgebende Pigmente auf organischer Basis und/oder übliche Metallpigmente (z.B. handelsübliche Aluminiumbronzen, Edelstahlbronzen...) und/oder nicht-metallische Effektpigmente (z.B. Perlglanz- bzw. Interferenzpigmente) enthalten. Die erfindungsgemäßen Basislacke enthalten vorzugsweise Metallpigmente und/oder Effektpigmente. Die Pigmentierungshöhe liegt in üblichen Bereichen.

Die erfindungsgemäßen Basislacke weisen bei Spritzviskosität im allgemeinen einen Festkörpergehalt von etwa 15 bis 50 Gew.-% auf. Der Festkörpergehalt variiert mit dem Verwendungszweck der Basislacke. Für Metalliclacke liegt er beispielsweise bevorzugt bei 17 bis 25 Gew.-%. Für unifarbige Lacke liegt er höher, beispielsweise bei 30 bis 45 Gew.-%.

Die erfindungsgemäßen Basislacke können zusätzlich übliche organische Lösemittel enthalten. Deren Anteil wird möglichst gering gehalten. Er liegt beispielsweise unter 15 Gew.-%.

Die erfindungsgemäßen Basislacke werden im allgemeinen auf einen pH-Wert zwischen 6,5 und 9,0 eingestellt. Der pH-Wert kann mit üblichen Aminen, wie z.B. Triethylamin, Dimethylaminoethanol und N-Methylmorpholin eingestellt werden.

Die erfindungsgemäßen Basislacke können sowohl bei der Serien- als auch bei der Reparaturlackierung eingesetzt werden. Sie werden vorzugsweise bei der Serienlackierung eingesetzt.

Als transparente Decklacke können Lacke auf Basis organischer Lösemittel, wasserverdünnbare Lacke und auch Pulverlacke eingesetzt werden. Die Lacke können als unpigmentierte Klarlacke oder als transparent pigmentierte Lacke eingesetzt werden.

Mit den erfindungsgemäßen Basislacken können auch ohne Überlackierung mit einem transparenten Decklack qualitativ hochwertige Lackierungen hergestellt werden. Auf diese Weise werden einschichtige Lackierungen erhalten, die sich durch einen besonders hohen Glanz auszeichnen.

Die erfindungsgemäßen Lacke können auf beliebige Substrate, wie z.B. Metall, Holz, Kunststoff oder Papier aufgebracht werden.

In den folgenden Beispielen wird die Erfindung näher erläutert.

Alle Angaben über Teile und Prozentsätze sind Gewichtsangaben, soweit nicht ausdrücklich etwas andees festgestellt wird.

A. Herstellung erfindungsgemäß einzusetzender Polyacrylatharze

A 1

In einem Stahlkessel, ausgestattet mit Monomerzulauf, Initiatorzulauf, Thermometer, Ölheizung und Rückflußkühler werden 32 Gew.-Teile Butylglykol vorgelegt und auf 110°C aufgeheizt. Dann wird eine Lösung von 6,0 Gew.-Teilen t-Butylperethylhexanoat in 6,0 Gew.-Teilen Butylglykol in einer solchen Geschwindigkeit zugegeben, daß die Zugabe nach 5 h 30 min. abgeschlossen ist.

Mit Beginn der Zugabe der t-Butylperethylhexanoatlösung wird auch mit der Zugabe einer Mischung aus (a1): 21,6 Gew.-Teilen n-Butylmethacrylat, 20,0 Gew.-Teilen Methylmethacrylat und 20,0 Gew.-Teilen Laurylmethacrylat; (a2): 20,4 Gew.-Teilen Hydroxypropylacrylat und (a3): 15,0 Gew.-Teilen Styrol begonnen. Die Mischung aus (a1), (a2) und (a3) wird in einer solchen Geschwindigkeit zugegeben, daß die Zugabe in 5 h abgeschlossen ist.

Nachdem die t-Butylperethylhexanoatlösung vollständig zugegeben worden ist, wird die Polymerisationstemperatur noch 1 h auf 110°C gehalten.

Dann wird eine Lösung aus 1,56 Gew.-Teilen t-Butylperethylhexanoat in 3,5 Gew.-Teilen Butylglykol in einer solchen Geschwindigkeit zugegeben, daß die Zugabe nach 1 h 30 min. abgeschlossen ist. Mit Beginn der Zugabe der t-Butylperethylhexanoatlösung wird auch mit der Zugabe einer Mischung aus (b1): 5,6 Gew.-Teilen Acrylsäure und (b2): 3,1 Gew.-Teilen Butylmethacrylat, 1,96 Gew.-Teilen Methylmethacrylat und 3,93 Gew.-Teilen Laurylmethacrylat und 1,96 Gew.-Teilen Styrol begonnen.

Die Mischung aus (b1) und (b2) wird in einer solchen Geschwindigkeit zugegeben, daß die Zugabe nach 1 h abgeschlossen ist.

Die Temperatur wird noch 1 h 30 min. auf 110°C gehalten. Die so erhaltene Harzlösung wird destillativ unter Vakuum auf 80 Gew.-% (Feststoffgehalt) aufkonzentriert und mit Dimethylethanolamin bei ca. 80°C innerhalb von ca. 30 min. bis zu einem Neutralisationsgrad von 80 % neutralisiert. Die Harzlösung wird auf 60°C abgekühlt und die Heizung abgestellt.

Anschließend wird langsam soviel Wasser zugegeben, bis der Feststoffgehalt der Dispersion etwa 40 Gew.-% beträgt.

Die erhaltene Dispersion hat folgende Kennzahlen: Säurezahl 35,8 mg KOH/g, Hydroxylzahl: 80, zahlenmittleres Molekulargewicht: 4990, Teilchengröße 221 nm ①

① gemessen mit Laserlichtstreuung, Meßgerät: Malvern Autosizer 2C.

A 2

In einem Stahlkessel ausgestattet mit Monomerzulauf, Initiatorzulauf, Thermometer, Ölheizung und Rückflußkühler werden 35,8 Gew.-Teile Butylglykol vorgelegt und auf 110°C aufgeheizt. Dann wird eine Lösung von 3,5 Gew.-Teilen t-Butylperethylhexanoat in 7,0 Gew.-Teilen Butylglykol in einer solchen Geschwindigkeit zugegeben, daß die Zugabe nach 5 h 30 min. abgeschlossen ist.

Mit Beginn der Zugabe der t-Butylperethylhexanoatlösung wird auch mit der Zugabe einer Mischung aus (a1): 22,0 Gew.-Teilen n-Butylacrylat, 20,0 Gew.-Teilen t-Butylacrylat und 15,0 Gew.-Teilen Methylmethacrylat; (a2): 23,0 Gew.-Teilen Hydroxypropylacrylat und (a3): 15,0 Gew.-Teilen Styrol begonnen. Die Mischung aus (a1), (a2) und (a3) wird in einer solchen Geschwindigkeit zugegeben, daß die Zugabe nach 4 h 50 min. abgeschlossen ist.

Nachdem die Mischung aus (a1), (a2) und (a3) vollständig zugegeben worden ist, werden (b1): 5,0 Gew.-Teile Acrylsäure in einer solchen Geschwindigkeit zugegeben, daß die Zugabe nach 20 min. abgeschlossen ist.

Die Temperatur wird noch 1 h 50 min. auf 110°C gehalten. Die so erhaltene Harzlösung wird auf 80°C abgekühlt und mit Dimethylethanolamin bei ca. 80°C, innerhalb von ca. 30 min. bis zu einem Neutralisationsgrad von 82,5 % neutralisiert. Die Harzlösung wird auf 60°C abgekühlt und die Heizung abgestellt.

Anschließend wird langsam soviel Wasser zugegeben, bis der Feststoffgehalt der Dispersion etwa 40 Gew.-% beträgt. Die erhaltene Dispersion hat folgende Kennzahlen: Säurezahl 36,5 mg KOH/g, Hydroxylzahl: 100, Teilchengröße: 267, Feststoffgehalt (in Gew.-%, 1 h 130°C): 40,0.

B. Herstellung eindes nicht erfindungsgemäßen Polyacrylatharzes

In einem Stahlkessel ausgestattet mit Monomerzulauf, Initiatorzulauf, Thermometer, Ölheizung und Rückflußkühler werden 35,8 Gew.-Teile Butylglykol vorgelegt und auf 110°C aufgeheizt. Dann wird eine Lösung von 3,5 Gew.-Teilen t-Butylperethylhexanoat in 7,0 Gew.-Teilen Butylglykol in einer solchen Geschwindigkeit zugegeben, daß die Zugabe nach 5 h 30 min. abgeschlossen ist.

Mit Beginn der Zugabe der t-Butylperethylhexanoatlösung wird auch mit der Zugabe einer Mischung aus 22,0 Gew.-Teilen n-Butylacrylat, 20,0 Gew.-Teilen t-Butylacrylat, 15,0 Gew.-Teilen Methylmethacrylat, 15,0 Gew.-Teilen Styrol, 23,0 Gew.-Teilen Hydroxypropylacrylat und 5,0 Gew.-Teilen Acrylsäure begonnen.

Die Monomerenmischung wird in einer solchen Geschwindigkeit Zugegeben, daß die Zugabe nach 5 h 10 min. abgeschlossen ist.

Weiteres Vorgehen analog zu A 2.

Die erhaltene Dispersion hat folgende Kennzahlen: Säurezahl: 39,0 mg KOH/g, Hydroxylzahl: 100, Feststoffgehalt (in Gew.-%, 1 h 130°C): 40,0.

C. Herstellung einer wäßrigen Polyurethanharzdispersion

569 Gew.-Teile eines Kondensationsproduktes (zahlenmittleres Molekulargewicht: 1460) aus 1 Mol einer polymeren Fettsäure (Dimerengehalt mindestens 98 Gew.-%, Trimerengehalt höchstens 2 Gew.-%, Monomerengehalt höchstens Spuren), 1 Mol Isophthalsäure und 2,626 Mol Hexandiol, 46 Gew.-Teile Dimethylolpropionsäure, 7 Gew.-Teile Neopentylglykol, 420 Gew.-Teile Methylethylketon und 213 Gew.-Teile Isophorondiisocyanat werden in einem temperierbaren, mit Rührer und Wasserabscheider versehenen Reaktionsgefäß unter Stickstoffatmosphäre auf 80°C erhitzt. Die Reaktion wird bis zu einem NCO-Gehalt von 1,0 Gew.-%, bezogen auf die Gesamtzusammensetzung fortgeführt. Dann werden 24 Gew.-Teile Trimethylolpropan zugegeben und es wird bei 80°C gerührt bis keine Isocyanatgruppen mehr nachweisbar sind.

Dann werden langsam 25,8 Gew.-Teile Dimethylethanolamin und anschließend 2552 Gew.-Teile deionisiertes Wasser eingerührt. Unter Vakuum wird das Methylethylketon abdestilliert.

Man erhält eine feinteilige Dispersion mit einem pH-Wert von 7,8, einem nichtflüchtigen Anteil von 27 Gew.-% und einer Säurezahl von 25 mg KOH/g.

### D. Herstellung einer wäßrigen Polyesterharzdispersion

In einem Reaktor, der mit einem Rührer, einem Thermometer und einer Füllkörperkolonne ausgestattet ist, werden 729 Gew.-Teile Neopentylglykol, 827 Gew.-Teile Hexandiol, 462 Gew.-Teile Hexahydrophthalsäureanhydrid und 1710 Gew.-Teile einer polymeren Fettsäure (Dimerengehalt mindestens 98 Gew.-%, Trimerengehalt höchstens 2 Gew.-%, Monomerengehalt höchstens Spuren) eingewogen und zum Schmelzen gebracht. Unter Rühren wird so aufgeheizt, daß die Kolonnenkopftemperatur 100°C nicht übersteigt. Es wird bei max. 220°C so lange verestert, bis eine Säurezahl von 8,5 erreicht ist. Nach Abkühlen auf 180°C werden 768 Gew.-Teile Trimellithsäureanhydrid zugegeben und weiter verestert, bis eine Säurezahl von 30 erreicht ist.

Dann wird auf 120°C abgekühlt und mit 1410 Gew.-Teilen Butanol angelöst. Nach dem Abkühlen auf 90°C werden langsam 16,2 Gew.-Teile Dimethylethanolamin und anschließend 1248 Gew.-Teile deionisiertes Wasser eingerührt. Man erhält eine feinteilige Dispersion mit einem pH-Wert von 7,8, einem nichtflüchtigen Anteil von 60 Gew.-% und einer Säurezahl von 30 mg KOH/g.

### E. Herstellung eins wäßrigen Metallic-Basislacks (Vergleichsbeispiel)

Es werden 33,5 Gew.-Teile Verdickungsmittel (Paste eines Natrium-Magnesium-Silikates mit Schichtstruktur*, 3%ig in Wasser) vorgelegt.

Dazu wird eine Lösung aus 4,3 Gew.-Teilen Butylglykol und 6,0 Gew.-Teilen einer 90%igen Lösung eines handelsüblichen wasserverdünnbaren Melamin-Formaldehydharzes in Isobutanol (Cymel 327[®1]) unter Rühren zugegeben. Anschliessend werden dieser Mischung 33,3 Gew.-Teile der PUR-Dispersion gemäß C und 0,4 Gew.-Teile Dimethylethanolaminlösung (10%ig in $H_2O$) unter Rühren zugegeben. Getrennt davon wird eine Aluminiumpigmentaufschlämmung wie folgt hergestellt: 4,4 Gew.-Teile einer handelsüblichen chromatierten Aluminiumpaste ( 65%ig in Benzin/Solventnaphta/Butylglycol, durchschnittlicher Teilchendurchmesser: 15 μm), werden unter Zugabe von 4 Gew.-Teilen Butylglykol homogenisiert. Zu dieser Aufschlämmung werden anschließend 6,4 Gew.-Teile des wasserlöslichen Polyesterharzes gemäß D und 1,0 Gew.-Teile Polypropylenglykol (zahlenmittleres Molekulargewicht: 900) gegeben. Diese Aluminiumpigmentaufschlämmung wird in die oben beschriebene Mischung eingerührt. Danach werden noch 6,7 Gew.-Teile deionisiertes Wasser zugegeben und mit Dimethylethanolaminlösung (10%ig in Wasser) ein pH-Wert von 7,65 - 7,85 eingestellt.

### F. Herstellung eines erfindungsgemäßen wäßrigen Metallic-Basislackes

Es werden 33,5 Gew.-Teile Verdickungsmittel (Paste eines Natrium-Magnesium-Silikates mit Schichtstruktur*, 3%ig in Wasser) vorgelegt.
Dazu wird eine Lösung aus 4,3 Gew.-Teilen Butylglykol und 6,0 Gew.-Teilen einer 90%igen Lösung eines handelsüblichen wasserverdünnbaren Melamin-Formaldehydharzes in Iso butanol (Cymel 327[®]) unter Rühren zugegeben. Anschließend werden dieser Mischung 33,3 Gew.-Teile der PUR Dispersion gemäß C, 0,4 Gew.-Teile Dimethylethanolaminlösung (10%ig in Wasser) und 4,8 Gew.-Teile der Polyacrylatharzdispersion gemäß A 1 nacheinander unter Rühren zugegeben. Getrennt davon wird eine Aluminiumpigmentaufschlämmung wie folgt hergestellt: 4,4 Gew.-Teile einer handelsüblichen chromatierten Aluminiumpaste (65%ig in Benzin/Solventnaphta/Butylglycol, durchschnittlicher Teilchendurchmesser: 15 μm) werden unter Zugabe von 4 Gew.-Teilen Butylglykol homogenisiert. Zu dieser Aufschlämmung werden anschließend 3,2 Gew.-Teile des wasserlöslichen Polyesterharzes gemäß D und 1,0 Gew.-Teile Polypropylenglykol (zahlenmittleres Molekulargewicht: 900) gegeben. Diese Aluminiumpigmentaufschlämmung wird in die oben beschriebene Mischung eingerührt. Danach werden noch 3,8 Gew.-Teile deionisiertes Wasser zugegeben und mit Dimethylethanolaminlösug (10%ig in Wasser) ein pH-Wert von 7,65 - 7,85 eingestellt.

### G. Applikation und Prüfung der wäßrigen Metallic-Basislacke

Die gemäß E und F hergestellten wäßrigen Metallic-Basislacke werden mit destilliertem Wasser auf einen Applikationsfestkörper von 24,2 Gew.-% eingestellt und auf ein mit einer handelsüblichen Elektrotauchlackierung und einem handelsüblichen Füller beschichtetes phosphatiertes Stahlblech so appliziert, daß eine Trockenfilmdicke von 12 - 15 μm erhalten wird. Die applizierten Basislacke werden 10 min. bei Raumtemperatur und 10 min. bei 80°C im Umluftofen getrocknet. Dann wird ein handelsüblicher 2-K-Klarlack auf Basis Polyacrylat/Polyisocyanat appliziert, anschließend wird kurz abgelüftet und 20 min. bei 140°C im Umluftofen eingebrannt.

\* Laponite RD
[®1] Handelsprodukt der American Cyanamid Company
\* Laponite RD

| Prüfergebnisse: | Basislack gemäß E | Basislack gemäß F |
|---|---|---|
| L 25° (1) | 102,7 | 103,2 |
| L 70° (1) | 40,4 | 40,9 |
| Glanz (2) | 83 | 84 |
| DOI (3) | 92 | 92 |
| Gitterschnitt (4) | 0 | 0 |
| Glanz nach KK (5) | 81 | 81 |
| Gitterschnitt nach KK | 1 | 1 |
| DOI nach KK | 91 | 91 |

1) Farbanteil L* nach DIN 6174 bestimmt mit dem Goniospektralphotometer von der Firma Zeiss.
2) Glanzgrad nach DIN 67530, Winkel 20°
3) Distinctness of Reflected Image: Bei Beleuchtung der zu beurteilenden Oberfläche unter 30° wird die direkte Reflexion im Glanzwinkel -30° und in unmittelbarer Nähe des Glanzwinkels bei -30° ± 0,3 ° gemessen. Der hieraus ermittelte DOI-Wert korrespondiert mit der visuell empfundenen Schärfe des Spiegelbildes eines Gegenstandes auf dieser Oberfläche. Der DOI-Wert wird auch Bildschärfewert genannt. Meßwerte: 100 bester Wert; 0 schlechtester Wert.
4) Prüfung nach DIN 53151 inklusive Tesaabriß-Test.
5) 240 h bei 40°C KK (nach DIN 50017)

## Prüfung der Viskositätsstabilität bei Scherbelastung

Zur Prüfung der Viskositätsstabilität bei Scherbelastung wurden Klarlackauszüge (Klarlackauszug = Basislack ohne Pigmente) der Basislacke gemäß E und F mit einem Blattrührer 1 h lang stark gerührt und anschließend in einem Viskosimeter mit einem Schergefälle von 0 bis 50 s$^{-1}$ geschert und vermessen. Der Klarlackauszug des Basislackes gemäß E zeigte einen Viskositätsabfall von ca. 40 %. Der Klarlackauszug des Basislackes gemäß F zeigte dagegen nur einen Viskositätsabfall von kleiner 10 %. Dieser geringe Viskositätsabfall hat keine negativen Auswirkungen auf das Applikationsverhalten und das Absetzverhalten.

## H. Herstellung einer Pigmentpaste für wäßrige Uni-Basislacke

Es werden 10 Gew.-Teile Verdickungsmittel (Paste eines Natrium-Magnesium-Silikates mit Schichtstruktur, 3%ig in Wasser) vorgelegt: Dazu werden unter Rühren 4,5 Gew.-Teile Dimethylethanolaminlösung (10%ig in Wasser), 2 Gew.-Teile Polypropylenglykol (Molekulargewicht 900), 46,70 Gew.-Teile des Polyesterharzes gemäß D und 23,35 Gew.-Teile deionisiertes Wasser zugegeben. Dann werden folgende Pigmente einzeln zugegeben und eingerührt: 2,65 Gew.-Teile Irgazin Rot DPP BO[1], 4,38 Gew.-Teile Cromophthalrot A2B[1], 5,29 Gew.-Teile Novoperm Orange H2 70[2] und 1,13 Gew.-Teile Sicotan Gelb 2 1912[3].
Schließlich wird die Mischung 20 min. unter einem üblichen Labordissolver homogenisiert.
Anschließend wird auf einer üblichen Laborperlmühle bis zu einer Kornfeinheit nach Hegmann (ISO 152) von ≤5μm gemahlen.
Der pH-Wert der Pigmentpaste sollte zwischen 8 - 8,5 liegen, sonst wird er mit einer Dimethylethanolaminlösung (10%ig in Wasser) auf diesen Wert eingestellt.

[1] Handelsprodukt der Ciba Geigy
[2] Handeslprodukt der Hoechst AG
[3] Handelsprodukt der BASF AG

I. Herstellung wäßriger Uni-Basislacke

Unter Verwendung der Pigmentpaste und den unten aufgeführten Bestandteilen werden zwei Uni-Basislacke hergestellt, wobei der Uni-Basislack 2 als Vergleichsbeispiel anzusehen ist. In beiden Basislacken ist das Gewichtsverhältnis von Pigment zu Festharz und das Gewichtsverhältnis von OH-haltigem Festharz zu Melaminformaldehydharz gleich.

|  | Uni-Basislack 1 | Uni-Basislack 2 |
|---|---|---|
| Pigmentpaste: | 41,33 | 33,57 |
| Polyacrylatharz gemäß A 2 | 25,77 | - |
| Polyacrylatharz gemäß B | - | 20,90 |
| Luwipal LR 8789 | 5,88 | 4,77 |
| Resimene 4518 | 0,92 | 0,75 |
| deionisiertes Wasser | 26,10 | 40,01 |

Die o. g. Bestandteile werden nacheinander unter Rühren gemischt. Bei den Zahlenangaben handelt es sich um Gewichtsteile. Die so erhaltenen Basislacke werden auf eine Viskosität von 28 s (DIN 4) eingestellt. Uni-Basislack 1 weist bei dieser Viskosität einen Feststoffgehalt von 34 Gew.-% (1 h, 130°C) und Uni-Basislack 2 einen Feststoffgehalt von 28,3 Gew.-% (1 h, 130°C) auf.

J. Applikation und Prüfung der Uni-Basislacke

Die gemäß I. hergestellten wäßrigen Uni-Basislacke werden nach 48 stündiger Lagerung nach folgendem Verfahren auf mit einer handelsüblichen Elektrotauchlackierung und einem handelsüblichen Füller beschichtete phosphatierte Stahlbleche appliziert: pneumatische Spritzapplikation bei einer relativen Luftfeuchte von 60 % und einer Temperatur von 23°C mit einem Druckgefäß, zweimaliger Auftrag, mit 2 Minuten Zwischenablüften nach dem ersten Auftrag, 1 Minute Ablüften nach dem zweiten Auftrag und 10 Minuten Trocknen bei 80°C im Umluftofen. Danach wird der handelsübliche Klarlack auf Basis Polyacrylat/Melaminformaldehydharz appliziert, kurz abgelüftet und 30 Minuten bei 130°C eingebrannt:
Die Prüfung der so erhaltenen Zweischichtlackierung lieferte folgende Ergebnisse:

|  | Zweischichtlackierung mit Uni-Basislack 1 | Zweischichtlackierung mit Uni-Basislack 2 |
|---|---|---|
| Steinschlag nach VDA[1] | 2 | 2-3 |
| Gitterschnitt | 0 | 0 |
| Glanz 20° | 87 | 87 |
| Kochergrenze[2] | 48 µm | 28 µm |
| Läufergrenze[3] | 48 µm | 24 µm |

[1] VDA: Verband der deutschen Automobilindustrie; Beschußmedium: 1000 g kantiges Strahlgußmittel; Korngröße: 4 - 5 mm; Druck: 1,5 bar; VDA-Steinschlaggerät 508
[2] Applikation nach beschriebener Methode; Basislackschichtstärken bei denen Kocherblasen auftreten
[3] Applikation nach beschriebener Methode; Basislackschichtstärken bei denen bei Applikation auf senkrecht stehenden Lochtafeln und anschließender Vortrocknung in senkrechter Stellung in der Basislackschicht Läufer entstehen.

**Patentansprüche**

1. Verfahren zur Herstellung einer mehrschichtigen, schützenden und/oder dekorativen Lackierung, bei dem

   (1) als Basislack ein wäßriger pigmentierter Basislack auf die Substratoberfläche aufgebracht wird

   (2) aus dem in Stufe (1) aufgebrachten Lack ein Polymerfilm gebildet wird

   (3) auf der so erhaltenen Basisschicht ein transparenter Decklack aufgebracht wird und anschließend

   (4) die Basisschicht zusammen mit dem Decklack eingebrannt wird,

   dadurch gekennzeichnet, daß der Basislack ein wasserverdünnbares Polyacrylatharz enthält, das erhältlich ist, indem

   (I)

   (a1) 40 bis 90 Gew.-% eines im wesentlichen carboxylgruppenfreien Alkyl(meth)acrylates mit bis zu 20 Kohlenstoffatomen im Alkylrest oder eines cycloaliphatischen (Meth)acrylsäureesters oder eines Gemisches aus solchen (Meth)acrylsäureestern

   (a2) 0 bis 45 Gew.-% eines Hydroxyalkylesters der Acrylsäure, Methacrylsäure oder einer anderen α,β-ethylenisch ungesättigten Carbonsäure, der im wesentlichen carboxylgruppenfrei ist oder eines Gemisches aus solchen Hydroxyalkylestern und

   (a3) 0 bis 40 Gew.-% eines im wesentlichen carboxylgruppenfreien vinylaromatischen Kohlenwasserstoffes oder eines Gemisches aus im wesentlichen carboxylgruppenfreien vinylaromatischen Kohlenwasserstoffen

   zu einem organischen Lösemittel oder Lösemittelgemisch gegeben und in Gegenwart mindestens eines Polymerisationsinitiators polymerisiert werden und

   (II)
   nachdem mindestens 80 Gew.-% der in Stufe (I) zugegebenen Monomeren umgesetzt worden sind

   (b1) 2,5 bis 15 Gew.-% einer ethylenisch ungesättigten Säure mit bis zu 6 Kohlenstoffatomen im Molekül oder eines Gemisches aus solchen ethylenisch ungesättigten Säuren und

   (b2) 0 bis 60 Gew.-% eines ethylenisch ungesättigten Monomeren oder eines Gemisches aus Monomeren, wie es unter (a1), (a2) oder (a3) definiert worden ist

   zugegeben werden und weiterpolymerisiert wird und

   (III)
   das nach Beendigung der Polymerisation erhaltene Polyacrylatharz zumindest teilweise neutralisiert und in Wasser dispergiert wird, wobei die Summe der Gewichtsanteile von (a1), (a2), (a3), (b1) und (b2) stets 100 Gew.-% ergibt und (a1), (a2), (a3), (b1) und (b2) in Art und Menge so ausgewählt werden, daß das aus (a1), (a2), (a3), (b1) und (b2) erhaltene Polyacrylatharz eine Hydroxylzahl von 0 bis 200, eine Säurezahl von 20 bis 100 und eine Glasübergangstemperatur ($T_G$) von -40 bis +60 °C aufweist.

2. Wäßriger Lack enthaltend ein nichtmetallisches Pigment oder eine Mischung aus nichtmetallischen Pigmenten und eine Mischung aus

   (A) 10 bis 95 Gew.-% eines wasserverdünnbaren Polyacrylatharzes,

   (B) 5 bis 50 Gew.-% eines Aminoplastharzes,

   (C) 20 bis 60 Gew.-% eines wasserverdünnbaren Polyesterharzes und

(D) 0 bis 85 Gew.-% eines wasserverdünnbaren Polyurethanharzes,

wobei die Summe der Gewichtsanteile der Komponenten (A) bis (D) stets 100 Gew.-% beträgt und wobei das wasserverdünnbare Polyacrylatharz (A) erhältlich ist, indem

(I)

(a1) 40 bis 90 Gew.-% eines im wesentlichen carboxylgruppenfreien Alkyl(meth)acrylates mit bis zu 20 Kohlenstoffatomen im Alkylrest oder eines cycloaliphatischen (Meth)acrylsäureesters oder eines Gemisches aus solchen (Meth)acrylsäureestern

(a2) 0 bis 45 Gew.-% eines Hydroxyalkylesters der Acrylsäure, Methacrylsäure oder einer anderen $\alpha,\beta$-ethylenisch ungesättigten Carbonsäure, der im wesentlichen carboxylgruppenfrei ist oder eines Gemisches aus solchen Hydroxyalkylestern und

(a3) 0 bis 40 Gew.-% eines im wesentlichen carboxylgruppenfreien vinylaromatischen Kohlenwasserstoffes oder eines Gemisches aus im wesentlichen carboxylgruppenfreien vinylaromatischen Kohlenwasserstoffen

zu einem organischen Lösemittel oder Lösemittelgemisch gegeben und in Gegenwart mindestens eines Polymerisationsinitiators polymerisiert werden, und

(II)
nachdem mindestens 80 Gew.-% der in Stufe (I) zugegebenen Monomeren umgesetzt worden sind

(b1) 2,5 bis 15 Gew.-% einer ethylenisch ungesättigten Säure mit bis zu 6 Kohlenstoffatomen im Molekül oder eines Gemisches aus solchen ethylenisch ungesättigten Säuren und

(b2) 0 bis 60 Gew.-% eines ethylenisch ungesättigten Monomeren oder eines Gemisches aus Monomeren, wie es unter (a1), (a2) oder (a3) definiert worden ist

zugegeben werden und weiterpolymerisiert wird und

(III)
das nach Beendigung der Polymerisation erhaltene Polyacrylatharz zumindest teilweise neutralisiert und in Wasser dispergiert wird, wobei die Summe der Gewichtsanteile von (a1), (a2), (a3), (b1) und (b2) stets 100 Gew.-% ergibt und (a1), (a2), (a3), (b1) und (b2) in Art und Menge so ausgewählt werden, daß das aus (a1), (a2), (a3), (b1) und (b2) erhaltene Polyacrylatharz eine Hydroxylzahl von 0 bis 200, eine Säurezahl von 20 bis 100 und eine Glasübergangstemperatur ($T_G$) von -40 bis +60 °C aufweist.

3. Verfahren oder Lack nach Anspruch 1 oder 2, dadurch gekennzeichnet, daß in den Stufen (I) und (II) bei einer Temperatur von 80 bis 160 °C, vorzugsweise 110 bis 160 °C in Gegenwart mindestens eines freie Radikale bildenden Initiators polymerisiert wird und daß die Stufe (I) 2 bis 8 Stunden, vorzugsweise 3 bis 6 Stunden dauert und die Zugabe der Komponenten (b1) und gegebenenfalls (b2) innerhalb von 10 bis 90 Minuten, vorzugsweise innerhalb von 30 bis 75 Minuten, erfolgt.

4. Verfahren oder Lack nach einem der Ansprüche 1 bis 3, dadurch gekennzeichnet, daß (b1) und gegebenenfalls (b2) erst dann zugegeben werden, wenn mindestens 90 Gew.-% der in Stufe (I) zugegebenen Monomeren umgesetzt worden sind.

5. Verfahren oder Lack nach einem der Ansprüche 1 bis 4, dadurch gekennzeichnet, daß der Basislack bzw. Lack ein Metallpigment und eine Mischung aus

(A) 0,1 bis 60, vorzugsweise 1 bis 30 Gew.-% des wasserverdünnbaren Polyacrylatharzes,

(B) 0 bis 50, vorzugsweise 5 bis 30 Gew.-% eines Aminoplastharzes,

(C) 0 bis 50, bevorzugt 15 bis 40 Gew.-% eines wasserverdünnbaren Polyesterharzes und

(D) 10 bis 99,9, vorzugsweise 20 bis 60 Gew.-% eines wasserverdünnbaren Polyurethanharzes

enthält, wobei die Summe der Gewichtsanteile der Komponenten (A) bis (D) stets 100 Gew.-% beträgt.

6. Verfahren oder Lack nach einem der Ansprüche 2 bis 5, dadurch gekennzeichnet, daß das wasserverdünnbare Polyesterharz erhältlich ist, indem

(α) Polyole oder ein Gemisch aus Polyolen und
(β) Polycarbonsäuren oder Polycarbonsäureanhydride oder ein Gemisch aus Polycarbonsäuren und/oder Polycarbonsäureanhydriden zu einem Polyesterharz mit einem zahlenmittleren Molekulargewicht von 600 bis 5000, vorzugsweise 800 bis 2500, einer Säurezahl von 20 bis 70, vorzugsweise 25 bis 55 und einer Hydroxylzahl von 30 bis 200, vorzugsweise 45 bis 100 umgesetzt werden und das erhaltene Polyesterharz wenigstens teilweise neutralisiert wird, wobei

- die Komponenten (α) und (β) in einem molaren Verhältnis von 1,15 - 2,00 : 1, vorzugsweise 1,2 - 1,5 : 1 eingesetzt werden,

- die Komponente (α) zu 30 bis 100 Mol-% aus aliphatischen Diolen besteht, die mindestens ein α-C-Atom enthalten, das sekundär, tertiär oder Glied eines kohlenstoffhaltigen Ringsystems ist und

- die Komponente (β) zu 50 bis 100 Mol-% aus aromatischen und/oder cycloaliphatischen Polycarbonsäuren und zu 15 bis 40 Mol-% aus Tri- und/oder Tetracarbonsäuren besteht, wobei die Tri- und/oder Tetracarbonsäuren so eingesetzt werden, daß sie im statistischen Mittel über mindestens zwei Carboxylgruppen in die Polyesterharzmoleküle eingebaut werden.

7. Verfahren oder Lack nach Anspruch 6, dadurch gekennzeichnet, daß die Komponente (β) zu 50 bis 80 Mol-% aus aromatischen und/oder cycloaliphatischen Polycarbonsäuren und zu 20 bis 50 Mol-% aus einer oder mehreren polymeren Fettsäuren besteht, wobei polymere Fettsäuren nicht als cycloaliphatische Polycarbonsäuren angesehen werden.

8. Verwendung des wäßrigen Lacks nach einem der Ansprüche 2 bis 7 als Basislack zur Herstellung von mehrschichtigen, schützenden und/oder dekorativen Lackierungen des basecoat/clearcoat Typs.

**Claims**

1. Process for the production of a multicoat, protective and/or decorative finish, in which process

(1) an aqueous pigmented basecoat is applied to the substrate surface as basecoat,
(2) a polymer film is formed from the coating applied in stage (1),
(3) a transparent topcoat is applied to the basecoat obtained in this way, and subsequently
(4) the basecoat is baked together with the topcoat,

characterized in that the basecoat contains a water-thinnable polyacrylate resin which can be obtained

(I)
by adding

(a1) 40 to 90 % by weight of an alkyl (meth)acrylate which is essentially free from carboxyl groups and has up to 20 carbon atoms in the alkyl radical, or a cycloaliphatic (meth)acrylic acid ester or a mixture of such (meth)acrylic acid esters,
(a2) 0 to 45 % by weight of a hydroxyalkyl ester of acrylic acid, methacrylic acid or of another $\alpha,\beta$-ethylenically unsaturated carboxylic acid which is essentially free from carboxyl groups, or a mixture of such hydroxyalkyl esters, and
(a3) 0 to 40 % by weight of a vinylaromatic hydrocarbon essentially free from carboxyl groups, or a mixture of vinylaromatic hydrocarbons essentially free from carboxyl groups,

to an organic solvent or mixture of solvents and carrying out a polymerization in the presence of at least one polymerization initiator, and
(II)

by adding, after at least 80 % by weight of the monomers added in stage (I) have reacted,

> (b1) 2.5 to 15 % by weight of an ethylenically unsaturated acid having up to 6 carbon atoms in the molecule, or a mixture of such ethylenically unsaturated acids, and
> (b2) 0 to 60 % by weight of an ethylenically unsaturated monomer, or a mixture of monomers as has been defined under (a1), (a2) or (a3),

and continuing the polymerization and
(III)
by neutralizing, at least partially, the polyacrylate resin obtained at the end of the polymerization and dispersing it in water, the sum of the proportions by weight of (a1), (a2), (a3), (b1) and (b2) always being 100 % by weight and the type and amount of (a1), (a2), (a3), (b1) and (b2) being chosen so that the polyacrylate resin obtained from (a1), (a2), (a3), (b1) and (b2) has a hydroxyl value of 0 to 200, an acid value of 20 to 100 and a glass transition temperature ($T_G$) of -40 to +60°C.

2. Aqueous paint containing a non-metallic pigment or a mixture of non-metallic pigments and a mixture consisting of

> (A) 10 to 95 % by weight of a water-thinnable polyacrylate resin,
> (B) 5 to 50 % by weight of an amino resin,
> (C) 20 to 60 % by weight of a water-thinnable polyester resin and
> (D) 0 to 85 % by weight of a water-thinnable polyurethane resin,

the sum of the proportions by weight of the components (A) to (D) always being 100 % by weight, and the water-thinnable polyacrylate resin (A) being obtainable

> (I)
> by adding
>
> (a1) 40 to 90 % by weight of an alkyl (meth)acrylate which is essentially free from carboxyl groups and has up to 20 carbon atoms in the alkyl radical, or a cycloaliphatic (meth)acrylic acid ester or a mixture of such (meth)acrylic acid esters,
> (a2) 0 to 45 % by weight of a hydroxyalkyl ester of acrylic acid, methacrylic acid or of another $\alpha,\beta$-ethylenically unsaturated carboxylic acid which is essentially free from carboxyl groups, or a mixture of such hydroxyalkyl esters, and
> (a3) 0 to 40 % by weight of a vinylaromatic hydrocarbon essentially free from carboxyl groups, or a mixture of vinylaromatic hydrocarbons essentially free from carboxyl groups,

to an organic solvent or mixture of solvents and carrying out a polymerization in the presence of at least one polymerization initiator, and
(II)
by adding, after at least 80 % by weight of the monomers added in stage (I) have reacted,

> (b1) 2.5 to 15 % by weight of an ethylenically unsaturated acid having up to 6 carbon atoms in the molecule, or a mixture of such ethylenically unsaturated acids, and
> (b2) 0 to 60 % by weight of an ethylenically unsaturated monomer, or a mixture of monomers as has been defined under (a1), (a2) or (a3),

and continuing the polymerization and
(III)
by neutralizing, at least partially, the polyacrylate resin obtained at the end of the polymerization and dispersing it in water, the sum of the proportions by weight of (a1), (a2), (a3), (b1) and (b2) always being 100 % by weight and the type and amount of (a1), (a2), (a3), (b1) and (b2) being chosen so that the polyacrylate resin obtained from (a1), (a2), (a3), (b1) and (b2) has a hydroxyl value of 0 to 200, an acid value of 20 to 100 and a glass transition temperature ($T_G$) of -40 to +60°C.

3. Process or paint according to Claim 1 or 2, characterized in that polymerization is carried out in stages (I) and (II) at a temperature of 80 to 160°C, preferably 110 to 160°C, in the presence of at least one free radical-forming initiator and in that the duration of stage (I) is 2 to 8 hours, preferably 3 to 6 hours, and the addition of the components (b1) and, if appropriate, (b2) is carried out over a period of 10 to 90 minutes, preferably over a period of 30 to 75 minutes.

4.  Process or paint according to any one of Claims 1 to 3, characterized in that (b1) and, if appropriate, (b2) are only added when at least 90 % by weight of the monomers added in stage (I) have reacted.

5.  Process or paint according to any one of Claims 1 to 4, characterized in that the basecoat or paint comprises a metallic pigment and a mixture consisting of

    (A) 0.1 to 60, preferably 1 to 30, % by weight of the water-thinnable polyacrylate resin,
    (B) 0 to 50, preferably 5 to 30, % by weight of an amino resin,
    (C) 0 to 50, preferably 15 to 40, % by weight of a water-thinnable polyester resin and
    (D) 10 to 99.9, preferably 20 to 60, % by weight of a water-thinnable polyurethane resin,

    the sum of the proportions by weight of the components (A) to (D) always being 100 % by weight.

6.  Process or paint according to any one of Claims 2 to 5, characterized in that the water-thinnable polyester resin can be obtained by reacting

    ($\alpha$) polyols or a mixture of polyols and
    ($\beta$) polycarboxylic acids or polycarboxylic anhydrides, or a mixture of polycarboxylic acids and/or polycarboxylic anhydrides to form a polyester resin having a number average molecular weight of 600 to 5000, preferably 800 to 2500, an acid value of 20 to 70, preferably 25 to 55, and a hydroxyl value of 30 to 200, preferably 45 to 100, and by neutralizing, at least partially, the resultant polyester resin, in which reaction

    -   the components ($\alpha$) and ($\beta$) are used in a molar ratio of 1.15 - 2.00 : 1, preferably 1.2 - 1.5 : 1,
    -   the component ($\alpha$) consists of 30 to 100 mol % of aliphatic diols containing at least one $\alpha$ carbon atom which is secondary, tertiary or a member of a carbon-containing ring system, and
    -   the component ($\beta$) consists of 50 to 100 mol % of aromatic and/or cycloaliphatic polycarboxylic acids and of 15 to 40 mol % of tricarboxylic and/or tetracarboxylic acids, the tricarboxylic and/or tetracarboxylic acids being used in such a way that on statistical average they are incorporated in the polyester resin molecules via at least two carboxyl groups.

7.  Process or paint according to Claim 6, characterized in that the component ($\beta$) consists of 50 to 80 mol % of aromatic and/or cycloaliphatic polycarboxylic acids and 20 to 50 mol % of one or more polymeric fatty acids, the polymeric fatty acids not being regarded as cycloaliphatic polycarboxylic acids.

8.  Use of the aqueous paint according to any one of Claims 2 to 7 as basecoat for the production of multicoat protective and/or decorative finishes of the basecoat/clearcoat type.

**Revendications**

1.  Procédé de préparation d'un laquage multicouche, protecteur et/ou décoratif, lors duquel

    (1) on procède à l'application d'une laque de base pigmentée aqueuse sur la surface du substrat,

    (2) on forme, à partir de la laque appliquée dans l'étape (1), un film polymère,

    (3) on procède à l'application, sur la couche de base ainsi obtenue, d'une laque transparente de finition et ensuite

    (4) on soumet à cuisson la couche de base conjointement à la laque de finition,

    caractérisé en ce que la laque de base contient une résine de polyacrylate hydrodiluable, que l'on peut obtenir en ajoutant à un solvant organique ou à un mélange de solvants

    (I)

        (a1) de 40 à 90 % en poids d'un (méth)acrylate alkyle, essentiellement exempt de gouvernements carboxyles, ayant jusqu'à 20 atomes de carbone dans le résidu alkyle ou d'un ester cycloaliphatique de l'acide (méth)acrylique, ou d'un mélange de tels esters de l'acide (méth)acrylique,

(a2) de 0 à 45 % en poids d'un ester hydroxyalkyle de l'acide acrylique, de l'acide méthacrylique ou d'un autre acide éthyléniquement insaturé en position $\alpha$, $\beta$, qui est essentiellement exempt de groupements carboxyles, ou d'un mélange d'esters hydroxyalkyles de ce genre,

(a3) de 0 à 40 % en poids d'un hydrocarbure vinylaromatique, essentiellement exempt de groupements carboxyles, ou d'un mélange d'hydrocarbures vinylaromatiques, essentiellement exempts de groupements carboxyles,

et en procédant à la polymérisation en présence au moins d'un agent initiateur de polymérisation et,

(II)
après avoir fait réagir au moins 80 % en poids des monomères ajoutés dans l'étape (I), en ajoutant

(b1) de 2,5 à 15 % en poids d'un acide éthyléniquement insaturé ayant jusqu'à 6 atomes de carbone dans la molécule, ou un mélange d'acides éthyléniquement insaturés de ce genre, et

(b2) de 0 à 60 % en poids d'un monomère éthyléniquement insaturé, ou d'un mélange de monomères, comme il a été défini sous (a1), (a2) ou (a3),

et en poursuivant la polymérisation, et,

(III)
en neutralisant au moins en partie et en mettant en dispersion dans l'eau la résine de polyacrylate obtenue après achèvement de la polymérisation, la somme des proportions en poids de (a1), (a2), (a3), (b1), et (b2) étant à chaque fois de 100 % en poids, et (a1), (a2), (a3), (b1), et (b2) étant choisis en nature et en quantité de sorte que la résine de polyacrylate obtenue à partir de (a1), (a2), (a3), (b1), et (b2) présente un indice hydroxyle de 0 à 200, un indice d'acidité de 20 à 100 et une température de transition vitreuse ($T_G$) de -40 à +60°C.

2. Laque aqueuse contenant un pigment non métallique ou un mélange de pigments non métalliques et un mélange de

(A) de 10 à 95 % en poids d'une résine de polyacrylate hydrodiluable,

(B) de 5 à 50 % en poids d'une résine aminoplaste,

(C) de 20 à 60 % en poids d'une résine de polyester et

(D) de 0 à 85 % en poids d'une résine de polyuréthanne hydrodiluable,

la somme des proportions en poids des composants (A) à (D) étant à chaque fois de 100 % en poids et la résine de polyacrylate (A) hydrodiluable pouvant être obtenue en ajoutant à un solvant organique ou à un mélange de solvants

(I)

(a1) de 40 à 90 % en poids d'un (méth)acrylate alkyle, essentiellement exempt de groupements carboxyles, ayant jusqu'à 20 atomes de carbone dans le résidu alkyle ou d'un ester cycloaliphatique de l'acide (méth)acrylique ou d'un mélange de tels esters de l'acide (méth)acrylique,

(a2) de 0 à 45 % en poids d'un ester hydroxyalkyle de l'acide acrylique, de l'acide méthacrylique ou d'un autre acide éthyléniquement insaturé en position $\alpha$, $\beta$, qui est essentiellement exempt de groupements carboxyles, ou d'un mélange d'esters hydroxyalkyles de ce genre,

(a3) de 0 à 40 % en poids d'un hydrocarbure vinylaromatique, essentiellement exempt de groupements carboxyles, ou d'un mélange d'hydrocarbures vinylaromatiques, essentiellement exempts de groupements carboxyles,

et en procédant à la polymérisation en présence au moins d'un agent initiateur de polymérisation et

(II)
après avoir fait réagir au moins 80 % en poids des monomères ajoutés dans l'étape (I), en ajoutant

(b1) de 2,5 à 15 % en poids d'un acide éthyléniquement insaturé ayant jusqu'à 6 atomes de carbone dans la molécule, ou d'un mélange d'acides éthyléniquement insaturés de ce genre, et

(b2) de 0 à 60 % en poids d'un monomère éthyléniquement insaturé ou d'un mélange de monomères, comme il a été défini sous (a1), (a2) ou (a3),

et en poursuivant la polymérisation, et

(III)
en neutralisant au moins en partie et en mettant en dispersion dans l'eau la résine de polyacrylate obtenue après achèvement de la polymérisation, la somme des proportions en poids de (a1), (a2), (a3), (b1), et (b2) étant à chaque fois de 100 % en poids, et (a1), (a2), (a3), (b1), et (b2) étant choisis en nature et en quantité de sorte que la résine de polyacrylate obtenue à partir de (a1), (a2), (a3), (b1), et (b2) présente un indice hydroxyle de 0 à 200, un indice d'acidité de 20 à 100 et une température de transition vitreuse ($T_G$) de -40 à +60°C.

3. Procédé ou laque selon la revendication 1 ou 2, caractérisé en ce que, dans les étapes (I) et (II), à une température de 80 à 160°C, de préférence de 110 à 160°C, l'on procède à la polymérisation en présence d'au moins un agent initiateur formant des radicaux libres, et en ce que l'étape (I) dure de 2 à 8 heures, de préférence de 3 à 6 heures, et en ce que l'addition des composants (b1) et, le cas échéant, (b2) se fait en l'espace de 10 à 90 minutes, de préférence en l'espace de 30 à 75 minutes.

4. Procédé ou laque selon l'une quelconque des revendications 1 à 3, caractérisé en ce que l'on ajoute (b1) et, le cas échéant, (b2) seulement quand au moins 90 % en poids des monomères ajoutés dans l'étape (I) ont réagi.

5. Procédé ou laque selon l'une quelconque des revendications 1 à 4, caractérisé en ce que la laque de base, respectivement la laque, contient un pigment métallique et un mélange de

(A) de 0,1 à 60, de préférence de 1 à 30 % en poids d'une résine polyacrylate hydrodiluable,

(B) de 0 à 50, de préférence de 5 à 30 % en poids d'une résine aminoplaste,

(C) de 0 à 50, de préférence de 15 à 40 % en poids d'une résine de polyester hydrodiluable et

(D) de 10 à 99,9, de préférence de 20 à 60 % en poids d'une résine de polyuréthanne hydrodiluable,

la somme des proportions en poids des composants (A) à (D) étant à chaque fois de 100 % en poids.

6. Procédé ou laque selon l'une quelconque des revendications 2 à 5, caractérisé en ce que l'on peut obtenir la résine de polyester hydrodiluable en faisant réagir

(α) des polyols ou un mélange de polyols et

(β) des acides polycarboxyliques ou des anhydrides d'acide polycarboxylique ou un mélange d'acides polycarboxyliques et/ou d'anhydrides d'acide polycarboxylique pour former une résine de polyester ayant un poids moléculaire moyen au nombre de 600 à 5000, de préférence de 800 à 2500, un indice d'acidité de 20 à 70, de préférence de 25 à 55, et un indice hydroxyle de 30 à 200, de préférence de 45 à 100, et en neutralisant au moins en partie la résine de polyester,

- les composants (α) et (β) étant utilisés dans un rapport molaire de 1,15 - 2,00 : 1, de préférence de 1,2 - 1,5 : 1,

- le composant (α) se composant jusqu'à de 30 à 100 % en moles de diols aliphatiques, qui contiennent au moins un atome de C en position α, qui est secondaire, tertiaire ou membre d'un système cyclique contenant du carbone, et

- le composant (β) se composant jusqu'à de 50 à 100 % en moles d'acides polycarboxyliques aromatiques et/ou cycloaliphatiques et jusqu'à de 15 à 40 % en moles d'acides tricarboxyliques et/ou tétracarboxyliques, les acides tricarboxyliques et/ou tétracarboxyliques étant utilisés de telle sorte qu'ils soient introduits en moyenne statistique par l'intermédiaire d'au moins deux groupements carboxyles dans la molécule de polyester.

7. Procédé ou laque selon la revendication 6, caractérisé en ce que le composant (β) se compose jusqu'à de 50 à 80 % en moles d'acides polycarboxyliques aromatiques et/ou cycloaliphatiques et jusqu'à de 20 à 50 % en moles d'un ou de plusieurs acides gras polymères, les acides gras polymères n'étant pas considérés en tant qu'acides polycarboxyliques cycloaliphatiques.

8. Utilisation de la laque aqueuse selon l'une quelconque des revendications 2 à 7 en tant que laque de base en vue de la préparation de laquages multicouche protecteurs et/ou décoratifs du type enduit de base/enduit clair.